# EUROPEAN PATENT SPECIFICATION

(11) **EP 0 945 567 B1**
(45) Date of publication and mention of the grant of the patent: **10.11.2004**
(21) Application number: 99830175.8
(22) Date of filing: 25.03.1999
(51) Int. Cl.: E04H 12/02, E04H 17/06, A01G 17/04, A01G 17/14, B29C 45/14

(54) **Outdoor pole and process of manufacture thereof**
Pfahl zur Freiluftbenutzung und Herstellungsverfahren dafür
Poteau pour utilisation extérieure et méthode pour sa fabrication

(30) Priority: 27.03.1998 IT MI980657
(43) Date of publication of application: 29.09.1999
(73) Proprietor: Zucchinali, Marcello, 24100 Bergamo (IT); Corna, Claudio, 24069 Trescore Balneario (Bergamo) (IT)
(72) Inventor: Zucchinali, Marcello, 24100 Bergamo (IT); Corna, Claudio, 24069 Trescore Balneario (Bergamo) (IT)
(74) Representative: Pizzoli, Antonio

(56) References cited:
- DE-U- 8 622 028
- FR-A- 2 354 020
- GB-A- 847 493
- US-A- 1 399 426
- US-A- 4 137 622
- US-A- 4 722 514
- DATABASE WPI Week 8710 Derwent Publications Ltd., London, GB; AN 1987-068978 XP002164376 -& JP 62 022521 A (TAKIRON CO)
- DATABASE WPI Week 8410 Derwent Publications Ltd., London, GB; AN 1984-058364 XP002164377 -& JP 59 014732 A (TAKIRON CO)

## Description

The present invention relates to an outdoor pole, and particularly a plastic pole that can be used in agriculture for supporting orchard or vineyard rows, creating fences or for other purposes. Moreover, the present invention relates to a process for the manufacture of said pole.

Poles for agriculture, and particularly poles for vineyards, are traditionally made of wood. However, there are many drawbacks to this material, such as time perishability due to sudden temperature changes, atmospheric agents or soil moisture, as well as the possibility that harmful pests and/or parasites may settle in natural cracks, cavities or other imperfections of the external surface. Another drawback of outdoor poles made of wood is given by the impossibility of mass-producing poles having the same size, resulting in problems during mechanized agricultural operations which require a certain homogeneity in cultivation support structures.

In order to solve the above drawbacks, producing concrete and/or steel poles (as in US 1 399 426) was contemplated, but these materials are heavier and in time tend to release particles of material, such as concrete splinters in case of frost or oxide powder in case of rain. Such particles are particularly harmful, both to agricultural products and to the machines used for their harvesting. Further, the machines or tools which would accidentally hit a pole of concrete and/or steel could be seriously damaged.

JP 59 014 732 A, US 4 137 622 and FR 2 354 020 disclose poles made of extruded plastic, which is difficult to provide with protruding accessories, while JP 62 022 521 A and US 4 722 514 disclose poles with the ends closed with members made of injection molded plastic , thus requiring an additional coating of the pole, if the latter is metallic.

Therefore, object of the present invention is providing an outdoor pole which is free from such drawbacks, i.e. a light, wear resistant and mass-reproducible pole. Said object is obtained by means of a pole and its manufacturing process whose main features are specified in claims 1 and 12.

By virtue of its particular internal structure, the pole according to the present invention is light, because the core is preferably hollow and at the same time it is impact resistant, since such a core is made of a rigid material, for example steel. However, unlike known poles, the core made of this material does not oxidize in time, because it is shielded by the external plastic coating. Therefore, the pole according to the present invention requires no maintenance and is considerably wear resistant, especially in comparison with the traditional poles made of wood.

Another advantage of the pole according to the present invention lies in that it can be easily and economically manufactured by a process of injection molding of plastic material. A higher homogeneity and strength of the plastic material is obtained by this kind of high pressure manufacture, for instance in comparison with conventional extrusion processes, generally used for the manufacture of products having an elongated shape.

Further, injection molding enables to precisely produce in a single piece all the innovative details, such as the supporting fins, the seats for wires and for irrigation pipes used in agriculture, which otherwise should be applied later on the known poles, resulting in an increase of time, costs and manufacturing complexity.

A further advantage of the pole according to the present invention lies in the possibility to produce the external surface with a rough and/or veined conformation. The pole obtained by this measure, as well as by using a wood-brown plastic material, although similar to a traditional pole made of wood, has not the relevant drawbacks, such as perishability due to atmospheric agents, or the difficulty of an homogeneous mass-production thereof.

The last, though not less important aspect, is that the pole according to the present invention is ecological, because recycled plastic can be used for the manufacture thereof Moreover, its disposal can be carried out without any external energy supply, since its core, made for example of steel, is melt and recovered in a disposal oven through the combustion of the external plastic layer.

Further advantages and features of the pole according to the present invention will be apparent to those which are skilled in the art from the following detailed description of one embodiment thereof with reference to the accompanying drawings, wherein:
- Fig. 1 shows a front view of the pole according to said embodiment;
- Fig. 2 shows a side view of the pole of Fig. 1;
- Fig. 3 shows a detailed, half-sectioned view of the lower part of the pole of Fig. 1; and
- Fig. 4 shows a detailed, half-sectioned view of the upper part of the pole of Fig. 1.

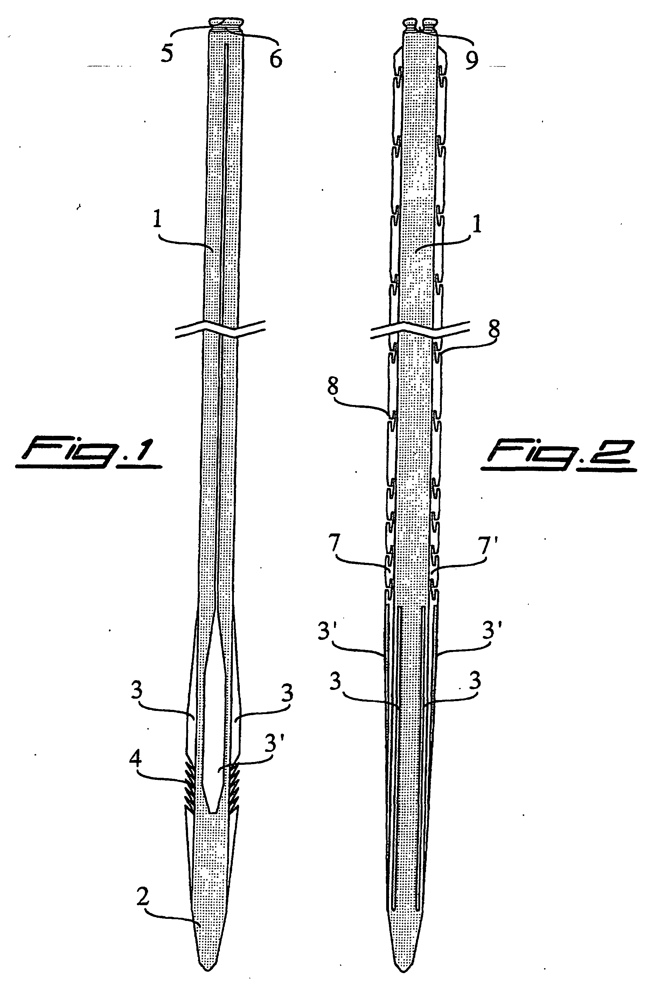

Referring to Fig. 1, the pole according to the present embodiment of the invention comprises an elongated body 1, having a round or elliptical cross-section and made of a preferably recycled plastic material, whose lower extremity ends in a point 2 for insertion in the ground. Four pairs of longitudinal fins 3, 3' are provided in proximity to point 2, in a diametrically opposite position, starting from the point vertex and extending for a length equal to the pole portion that presumably will be inserted into the ground. Fins 3, 3' are intended to increase the pole stability once inserted into the ground. Particularly, fins 3' are preferably provided with a multiplicity of upward turned teeth 4, which are suitable to prevent the pole from being accidentally pulled out from the ground, for example if the steel wires (not shown in the figure), fastened to the pole, form an arc together with the adjacent poles. The pole top 5 is provided with at least one circular perimetrical grooving 6 serving as a seat for winding further wires suitable for the connection of adjacent poles, for example in order to sustain anti-hail nets.

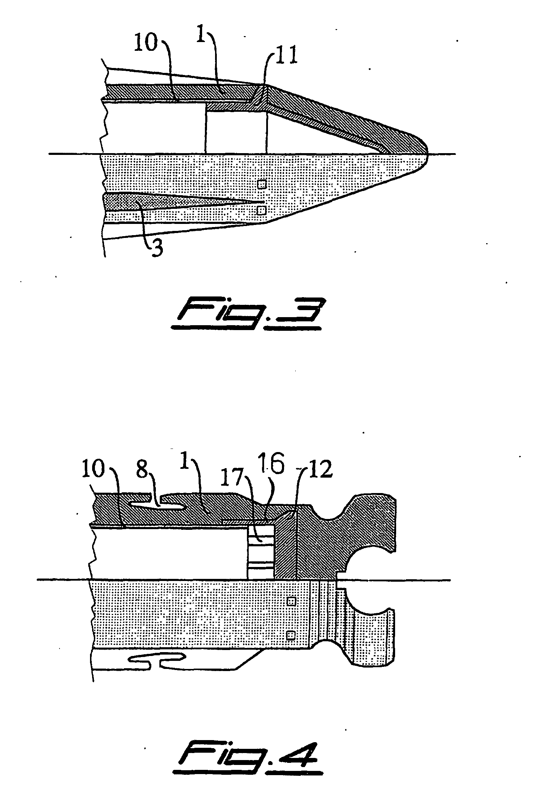

Now, also with reference to Figure 2, body 1 is shown to be provided with two further longitudinal fins 7, 7', which are perpendicularly arranged with respect to fins 3, 3' and extending along the pole as a continuation of fins 3'. Fins 7, 7' are provided with a multiplicity of carvings 8 shaped as a T rotated of 90°, working as seats where the plant-supporting wires are inserted. By being regularly spaced, carvings 8 enable the wires to be heightened from time to time according to the growth of the sustained plants. The shape of carvings 8 can change if they are used as seats for other members, such as spacers suitable for separating wires and poles and/or irrigation pipes. Similarly, the pole top 5 is provided with an upwards open horizontal cylindrical seat 9, in which an irrigation pipe can be pressure-inserted.

With reference to Figs. 3 and 4, the pole is shown to conveniently comprise at least one rigid core 10 having an elongated, in particular cylindrical shape which is inserted into plastic body 1, which serves as a protective coating, by covering the sides and both ends of the core. The latter is preferably hollow in order to reduce the pole weight and, for example, it is formed of a tube preferably made of extruded or soldered steel. This tube is arranged coaxial with respect to body 1 and can be plugged at both sides with a lower closing member 11 and an upper closing member 12, both of them being preferably made of plastic material. The shape of carvings 8, provided with an inlet segment, perpendicular to the pole axis and connected to the middle of a second segment, acting as a seat and parallel to the pole axis, can be seen in detail in Fig. 4. The inlet segment broadens outwards so as to assist insertion of plant supporting wires, while the segment acting as a seat allows the wires to move longitudinally between the two ends still remaining attached to the pole, according to the vertical position of the latter with respect to the adjacent poles.

The lower closing member 11 is provided with a substantially cylindrical portion integral with a substantially conical portion. The external diameter of the cylindrical portion is almost equal to the internal diameter of core 10.

The upper closing member 12 is provided with a substantially cylindrical portion 16. The internal diameter of cylindrical portion 16 is almost equal to the external diameter of core 10, however the latter does not completely penetrate into the internal cavity of portion 16 during assemblage, since a multiplicity of longitudinal ribs 17 starting from the closed base and reaching about the middle of the cylindrical portion 16 is made thereinto. Thanks to this arrangement the plastic coating 1 of the pole is prevented from being damaged by a possible expansion of core 10, due for example to an increase of the external temperature. In this case, in fact, core 10 would expand in the free half of the internal cavity of cylindrical portion 16, thereby forcing ribs 17 and avoiding accidental damages of the pole.

The manufacturing process includes separate injection moldings of a lower portion and an upper complementary portion of body I of the pole according to the present invention. This molding of the two portions of body is accomplished by means of molds whose internal walls have a shape complementary to that of the external surface of one pole portion and comprise a cylinder having a shape corresponding to that of a portion of core 10. Once molded and cooled, the two portions of body I are joined together, for instance by plastic welding, with core 10 arranged in the two cavities obtained through said cylinders of the two molds. Therefore, the use of closing members 11 and 12 of core 10 is, by this measure, optional.

Closing members 11 and 12, being preferably made of the same material injected in the mold or anyway of a material compatible therewith, form a homogeneous whole together with the injected plastic.

Obviously, in other embodiments of the pole according to the present invention, shape, size and functional members arranged on the external surface can vary according to the foreseen use, which can also be different from the agricultural one. For example, the pole according to the present invention can be advantageously used for supporting traffic signs. Obviously, also the structure and/or the material of core 10 can vary according to the intended use of the pole.

## Claims

1. A pole comprising at least one rigid core (10) having an elongated shape inserted in a plastic coating (1), **characterized in that** this coating (1) covers the external surfaces and both ends of the rigid core (10) and comprises a lower portion and an upper complementary portion, both made of injection molded plastic and joined together, with the rigid core (10) arranged in cavities made in these portions.

2. A pole according to the preceding claim, **characterized in that** said rigid core (10) comprises a hollow tube.

3. A pole according to the preceding claim, **characterized in that** both ends of said rigid core (10) are closed by a plastic closing member (11, 12).

4. A pole according to the preceding claim, **characterized in that** the first closing member (11) comprises a substantially cylindrical portion integral with a substantially conical portion the external diameter of this cylindrical portion being about equal to the internal diameter of the rigid core (10).

5. A pole according to claim 3, **characterized in that** the second closing member (12) comprises a substantially cylindrical portion (16) which is closed by a flat base, has an internal diameter almost equal to the external diameter of the rigid core (10), and is provided inside with a multiplicity of longitudinal ribs (17) starting from said closed base.

6. A pole according to any of the preceding claims, **characterized in that** it is provided with one or more longitudinal fins (3, 3', 7, 7') made in a single piece together with the plastic coating (1) of the rigid core (10).

7. A pole according to claim 6, **characterized in that** it comprises at least two longitudinal fins (3') which start from one pole end (2) and are provided with a multiplicity of teeth (4) turned towards the opposite end (5) thereof.

8. A pole according to claim 6 or 7, **characterized in that** it comprises at least two longitudinal fins (7, 7') provided with a multiplicity of substantially equally spaced carvings (8).

9. A pole according to claim 8, **characterized in that** said carvings (8) are substantially shaped as a T rotated of 90°, wherein a segment is perpendicular and the other is parallel to the pole axis.

10. A pole according to any of the preceding claims, **characterized in that** it comprises an end (5) provided with at least one perimetrical circular grooving (6).

11. A pole according to any of the preceding claims, **characterized in that** it comprises an end (5) provided with at least one horizontal cylindrical seat (9) open upwards.

12. Process for manufacturing a pole according to any of the claims 1 to 11, **characterized in that** it includes separate injection moldings of the lower portion and the upper complementary portion of the plastic coating (1) by means of molds in which the internal walls have a shape complementary to that of the external surface of one portion of the pole and comprise a cylinder having a shape corresponding to that of one portion of the rigid core (10), said portions of the plastic coating (1) being subsequently joined together, with the rigid core (10) arranged in the two cavities obtained by means of said two cylinders of the two molds.

13. Process according to claim 12, **characterized in that** the lower and the upper portions of the plastic coating (1) are joined together by plastic welding.

## Patentansprüche

1. Pfosten mit wenigstens einem festen Kern (10) länglicher Gestalt, der in eine Kunststoffhülle (1) eingesetzt ist, **dadurch gekennzeichnet, dass** diese Hülle (1) die Außenflächen und beide Enden des festen Kerns (10) bedeckt und einen unteren Abschnitt und einen oberen, komplementären Abschnitt aufweist, die beide aus spritzgeformtem Kunststoff bestehen und miteinander verbunden sind, wobei der feste Kern (10) in von diesen Abschnitten gebildeten Hohlräumen angeordnet ist.

2. Pfosten nach dem vorhergehenden Anspruch, **dadurch gekennzeichnet, dass** der feste Kern (10) ein Hohlrohr ist.

3. Pfosten nach dem vorhergehenden Anspruch, **dadurch gekennzeichnet, dass** beide Enden des festen Kerns (10) durch ein Kunststoffverschlusselement (11,12) verschlossen sind.

4. Pfosten nach dem vorhergehenden Anspruch, **dadurch gekennzeichnet, dass** das erste Verschlusselement (11) einen im Wesentlichen zylindrischen Abschnitt aufweist, der mit einem im Wesentlichen konischen Abschnitt integral ausgebildet ist, wobei der Außendurchmesser dieses zylindrischen Abschnitts etwa gleich dem Innendurchmesser des festen Kerns (10) ist.

5. Pfosten nach Anspruch 3, **dadurch gekennzeichnet, dass** das zweite Verschlusselement (12) einen im Wesentlichen zylindrischen Abschnitt (16) aufweist, der von einer flachen Basis verschlossen ist, einen Innendurchmesser hat, der dem Außendurchmesser des festen Kerns (10) fast gleich ist und im Innern mit mehreren Längsrippen (17) versehen ist, die von der verschlossenen Basis ausgehen.

6. Pfosten nach einem der vorhergehenden Ansprüche, **dadurch gekennzeichnet, dass** er mit einer oder mehreren Längsrippen (3,3',7,7') versehen ist, die einstückig zusammen mit der Kunststoffhülle (1) des festen Kerns (10) ausgebildet sind.

7. Pfosten nach Anspruch 6, **dadurch gekennzeichnet, dass** er wenigstens zwei Längsrippen (3') aufweist, die vom einen Pfostenende (2) ausgehen und mit mehreren Zähnen (4) versehen sind, die zum entgegengesetzten Ende (5) desselben gerichtet sind.

8. Pfosten nach Anspruch 6 oder 7, **dadurch gekennzeichnet, dass** er wenigstens zwei Längsrippen (7.7') aufweist, die mit mehreren im Wesentlichen gleichmäßig beabstandeten Einschnitten (8) versehen sind.

9. Pfosten nach Anspruch 8, **dadurch gekennzeichnet, dass** diese Einschnitte (8) im Wesentlichen als ein um 90° gedrehtes T ausgebildet sind, wobei ein Segment senkrecht und das andere parallel zur Pfostenachse verläuft.

10. Pfosten nach einem der vorhergehenden Ansprüche, **dadurch gekennzeichnet, dass** er ein Ende (5) aufweist, das mit wenigstens einer kreisförmigen Umfangsrille (6) versehen ist.

11. Pfosten nach einem der vorhergehenden Ansprüche, **dadurch gekennzeichnet, dass** er ein Ende (5) aufweist, das mit wenigstens einem horizontalen, zylindrischen Sitz (9) versehen ist, der nach oben offen ist.

12. Verfahren zum Herstellen eines Pfostens nach einem der Ansprüche 1 bis 11, **dadurch gekennzeichnet, dass** es umfasst: getrenntes Spritzformen des unteren Abschnitts und des oberen, komplementären Abschnitts der Kunststoffhülle (1) mittels Formen, in denen die Innenwände eine Gestalt haben, die komplementär zu der der Außenfläche eines Abschnitts des Pfostens ist, und einen Zylinder haben, der eine einem Abschnitt des festen Kerns (10) entsprechende Gestalt hat, wobei diese Abschnitte der Kunststoffhülle (1) anschließend miteinander vereinigt werden, wobei der feste Kern (10) in den zwei Hohlräumen angeordnet wird, die mittels der zwei Zylinder der zwei Formen erhalten werden.

13. Verfahren nach Anspruch 12, **dadurch gekennzeichnet, dass** die unteren und die oberen Abschnitte der Kunststoffhülle (1) miteinander durch Kunststoffverschweißung verbunden werden.

## Revendications

1. Poteau comprenant au moins un noyau rigide (10) d'une forme oblongue inséré dans un revêtement plastique (1), **caractérisé en ce que** ce revêtement (1) couvre les surfaces externes et les deux extrémités du noyau rigide (10) et comprend une portion inférieure et une portion supérieure complémentaire, les deux réalisées en plastique moulé par injection et assemblées, le noyau rigide (10) étant agencé dans des cavités réalisées dans ces portions.

2. Poteau selon la revendication 1, **caractérisé en ce que** ledit noyau rigide (10) comprend un tube creux.

3. Poteau selon la revendication précédente, **caractérisé en ce que** les deux extrémités dudit noyau rigide (10) sont fermées par un élément de fermeture plastique (11, 12).

4. Poteau selon la revendication précédente, **caractérisé en ce que** le premier élément de fermeture (11) comprend une portion sensiblement cylindrique intégrale avec une portion sensiblement conique, le diamètre externe de cette portion cylindrique étant environ égal au diamètre interne du noyau rigide (10).

5. Poteau selon la revendication 3, **caractérisé en ce que** le deuxième élément de fermeture (12) comprend une portion sensiblement cylindrique (16) qui est fermée par une base plate, qui a un diamètre interne presqu'égal au diamètre externe du noyau rigide (10) et qui présente à l'intérieur une multitude de nervures longitudinales (17) commençant à ladite base fermée.

6. Poteau selon l'une des revendications précédentes, **caractérisé en ce qu'**il est pourvu d'une ou de plusieurs ailettes longitudinales (3, 3', 7, 7') réalisées en une pièce ensemble avec le revêtement plastique (1) du noyau rigide (10).

7. Poteau selon la revendication 6, **caractérisé en ce qu'**il comprend au moins deux ailettes longitudinales (3') qui commencent à une extrémité de poteau (2) et qui présentent une multitude de dents (4) tournées vers son extrémité opposée (5).

8. Poteau selon la revendication 6 ou 7, **caractérisé en ce qu'**il comprend au moins deux ailettes longitudinales (7,7') pourvues d'une multitude de découpages (8) espacés sensiblement uniformément.

9. Poteau selon la revendication 8, **caractérisé en ce que** lesdits découpages (8) sont sensiblement en forme de T tournés sur 90°, où un segment est perpendiculaire et l'autre est parallèle à l'axe du poteau.

10. Poteau selon l'une des revendications précédentes, **caractérisé en ce qu'**il comprend une extrémité (5) pourvue d'au moins une rainure périmétrique circulaire (6).

11. Poteau selon l'une des revendications précédentes, **caractérisé en ce qu'**il comprend une extrémité (5) pourvue d'au moins un siège horizontal cylindrique (9) ouvert vers le haut.

12. Procédé de fabrication d'un poteau selon l'une des revendications 1 à 11, **caractérisé en ce qu'**il comporte des moulages à injection séparés de la portion inférieure et de la portion supérieure complémentaire du revêtement plastique (1) au moyen de moules dans lesquels les parois internes ont une forme complémentaire à celle de la surface externe d'une portion du poteau et comprennent un cylindre d'une forme correspondant à celle d'une portion du noyau rigide (10), lesdites portions du revêtement plastique (1) étant ensuite assemblées, le noyau rigide (10) agencé dans les deux cavités étant obtenu au moyen desdits deux cylindres des deux moules.

13. Procédé selon la revendication 12, **caractérisé en ce que** les portions inférieure et supérieure du revêtement plastique (1) sont assemblées par soudage plastique.
